# FASCICULE DE BREVET EUROPEEN

(11) **EP 2 291 235 B1**
(45) Date de publication et mention de la délivrance du brevet: **18.09.2019**
(21) Numéro de dépôt: 09761919.1
(22) Date de dépôt: 19.05.2009
(51) Int. Cl.: B01J 20/06, B01J 20/14, C02F 1/42, C02F 1/28, B01J 39/10, B01J 41/10, C05D 9/00, B01J 23/745, A01N 59/16, B09C 1/08, C09D 5/02

(54) **NOUVEAUX MATERIAUX COMPOSITÉS, LEUR PROCÉDÉ DE PRÉPARATION ET LEURS UTILISATIONS**
NEUE VERBUNDWERKSTOFFE, HERSTELLUNGSVERFAHREN DAFÜR UND VERWENDUNG DAVON
NOVEL COMPOSITE MATERIALS, METHOD FOR PREPARING SAME AND USES THEREOF

(30) Priorité: 19.05.2008 FR 0853214
(43) Date de publication de la demande: 09.03.2011
(73) Titulaire: Olmix, 56580 Brehan (FR); Centre National de la Recherche Scientifique (C.N.R.S.), 75016 Paris (FR); Université de Haute Alsace, 68093 Mulhouse Cedex (FR)
(72) Inventeur: KNOERR, Raphaël, 68500 Guebwiller (FR); DEMAIS, Hervé, 56390 Brandivy (FR); BRENDLE, Jocelyne, 68270 Wittenheim (FR); LEBEAU, Bénédicte, 68700 Wattwiller (FR); PATARIN, Joël, 68720 Flaxlanden (FR)
(74) Mandataire: Lavoix
(86) Numéro de dépôt international: PCT/FR2009/050935
(87) Numéro de publication internationale: WO 2009/150368

(56) Documents cités:
- WO-A-03/086564
- WO-A-2006/116421
- GB-A- 640 455
- GB-A- 960 639
- US-A- 3 499 837
- US-B1- 6 200 482
- P.B. MITCHELL; K. ATKINSON: "The novel use of ion exchange materials as an aid to reclaiming derelict mining land" MINERALS ENGINEERING, vol. 4, no. 7-11, 1991, pages 1091-1113, XP002506264
- S D J INGLETHORPE: "An investigation of the sorption of arsenic by diatomite" BRITISH GEOLOGICAL SURVEY, DEPARTMENT FOR INTERNATIONAL DEVELOPMENT, TECHNICAL REPORT WC/99/20, [Online] 1999, pages 1-27, XP002506263 Nottingham, United Kingdom Extrait de l'Internet: URL:http://www.thebgs.co.uk/research/inter national/dfid-kar/WC99020_col.pdf> [extrait le 2008-12-01]
- TWARDOWSKA IRENA: "Soil and Water Pollution Monitoring, Protection and Remediation" [Online] 2006, , XP002506139 ISBN: 9781402047282 Extrait de l'Internet: URL:http://www.springerlink.com/content/k5 46hp57463m0616/> [extrait le 2008-11-28] page 369 - page 386 page 380, ligne 15, alinéa 2.3 - ligne 19; figure 10
- Min Jang ET AL: "Removal of Arsenite and Arsenate Using Hydrous Ferric Oxide Incorporated into Naturally Occurring Porous Diatomite", Environmental Science & Technology, vol. 40, no. 5, 1 March 2006 (2006-03-01), pages 1636-1643, XP055384613, US ISSN: 0013-936X, DOI: 10.1021/es051501t

## Description

La présente invention concerne de nouveaux matériaux composites, en particulier à base de fer, et leur procédé de préparation, ainsi que leurs utilisations, notamment dans le domaine de la décontamination des eaux et des sols.

Les terres de diatomée sont des algues eucaryotes fossilisées microscopiques (∼1-200 µm) trouvant leurs origines principalement dans les zones lacustres. Elles sont protégées par une enveloppe dure appelée frustule, de composition chimique générale : 80% de silice, 5% d'alumine, 5% d'oxyde de calcium et le complément d'autres minéraux. Aussi, l'origine ainsi que l'âge du sédiment conditionnent les propriétés de ce matériau naturel. Par exemple, une terre de diatomée extraite de carrières près des mers, présente un taux de cristallinité de 60% et une composition en CaCO₃ de l'ordre de 25%, contre moins de 1% de cristallinité et de carbonate pour une terre de diatomée issue de gisement d'eau douce.

D'un point de vue structurel, la terre de diatomée présente des caractéristiques physiques intrinsèques remarquables de par la forte porosité de sa frustule par exemple (taille de pore unitaire du micromètre) constituant environ 40% du volume total. De fait, de nombreuses applications de ce matériau macroporeux sont possibles sans qu'aucune modification préliminaire ne soit requise. En effet, la porosité de la frustule peut être assimilée à un tamis moléculaire (J. Parkinson and R. Gordon, Nanotechnology, 1999, 17, 230), où la taille de pore est régie par la nature de l'espèce. Un exemple d'application de la terre de diatomée à l'état brut, est son utilisation en tant que média filtrant, en piégeant par interactions physiques des composés organiques de taille importante. De fait, il vient que la sélectivité des composés organiques à piéger est dépendante de la porosité de la terre de diatomée, et donc de la nature de la terre de diatomée considérée.

Il a été mis en évidence que la texture même de la frustule de la terre de diatomée est telle qu'elle est recouverte de pointes acérées, donnant lieu à des propriétés abrasives (Z. Korunic, J. stored Prod. Res., 1998, 34, 87-97; W. Quarles, IPM Practitioner, 1992, 14, 1-11 et W. Quarles, IPM Practitioner, 1996, 18, 1-10), largement mises en application au niveau industriel dans la lutte anti-parasitaire. D'autres applications de la terre de diatomée brute directement liées à ses propriétés physico-chimiques sont à relever. En effet, ce matériau est non inflammable, non soluble dans l'eau et extrêmement stable à l'air. Ainsi, la terre de diatomée trouve des applications dans l'isolation thermique (O. Unal, T. Uygunoglu and A. Yildiz, Building and Environment, 2007, 42, (2), 584), mais plus couramment en tant que charge fonctionnelle (X. Li, W. Chen, C. Bian, J. He, N. Xu and G. Xue, Applied Surface Science, 2003, 217, (1-4), 16) dans l'industrie de la peinture, du papier ou bien encore du caoutchouc.

La terre de diatomée est composée majoritairement de silice, présente soit sous forme de ponts siloxane (Si-O-Si) participant à la structure du squelette de la terre de diatomée, soit sous forme de groupements silanols (Si-OH) situés à la surface du matériau (P. Yuan, D. Q. Wu, H. P. He and Z. Y. Lin, Applied Surface Science, 2004, 227, (1-4), 30-39). Assimilés à des sites réactifs, ces derniers confèrent au matériau une réactivité chimique (J.-B. d'Espinose de la Caillerie, M. R. Aimeur, Y. E. Kortobi and A. P. Legrand, Journal of Colloid and Interface Science, 1997, 194, (2), 434-439) en conditionnant la charge, l'acidité, le caractère hydrophile de la surface, mais aussi les réactions d'échange de ligands et dite de «grafting» (greffage) permettant la fonctionnalisation de la terre de diatomée. Aussi, la modification de la terre de diatomée, à travers les silanols de surface, a pour objectif l'obtention de matériaux hybrides possédant des propriétés physico-chimiques nouvelles voire améliorées par rapport au matériau initial. Le document US 3 499 837 divulgue un matériau composite comprenant de la terre de diatomée recouverte d'une couche de phase cristalline à base de fer pouvant être Fe₂O₃, FeO(OH) ou Fe(OH)₃ pour la décontamination d'eaux usées contaminées par le phosphate.

P.B. MITCHELL; K. ATKINSON: "The novel use of ion exchange materials as an aid to reclaiming derelict mining land",MINERALS ENGINEERING, vol. 4, no. 7-11, 1991, pages 1091-1113 divulgue de la terre de diatomée comprenant du carbonate de calcium pour l'élimination d'espèces cationiques d'une solution.

S D J INGLETHORPE: "An investigation of the sorption of arsenic by diatomite",BRITISH GEOLOGICAL SURVEY, DEPARTMENT FOR INTERNATIONAL DEVELOPMENT, TECHNICAL REPORT WC/99/20, 1999, pages 1-27 , divulgue un matériau composite pour l'adsorption d'arsenic de terrains contaminés constitué de terre de diatomée dont la surface est recouverte d'une phase cristalline à base de fer sous forme d'oxyde de fer, en particulier sous forme de FeO(OH).

Min Jang ET AL: "Removal of Arsenite and Arsenate Using Hydrous Ferric Oxide Incorporated into Naturally Occurring Porous Diatomite",Environmental Science & Technology, vol. 40, no. 5, 1 mars 2006 , pages 1636-1643 divulgue un matériau composite pour l'adsorption d'arsenites comprenant de la terre de diatomée et de l'oxyde de fer amorphe présent à la surface de ladite terre de diatomée

Ainsi, la présente invention a pour but de fournir un matériau composite à base de terre de diatomée obtenu en faisant croître une phase cristalline spécifique à la surface du squelette de diatomée.

La présente invention a également pour but de fournir un matériau composite à base de terre de diatomée ayant les propriétés de la terre de diatomée combinées à celles de la phase cristalline nouvellement créée.

Dans le matériau composite selon l'invention, une phase cristalline à base de fer recouvre de façon homogène la terre de diatomée.

Le terme "terre de diatomée" désigne l'ensemble formé par le squelette de diatomée, les phases annexes tels que le quartz et l'éventuel carbonate de calcium.

La présente invention concerne un matériau composite comprenant de la terre de diatomée associée à du carbonate de calcium et une phase cristalline à base de fer, caractérisé en ce que ladite phase cristalline est présente uniquement à la surface de ladite terre de diatomée, et plus particulièrement à la surface des squelettes des diatomées.

L'expression "terres de diatomée associées à du carbonate de calcium" désigne à la fois les terres de diatomée comprenant initialement du carbonate de calcium et les terres de diatomée ne comprenant pas initialement du carbonate de calcium mais auxquelles du carbonate de calcium est additionné.

Ainsi, les terres de diatomée utilisées dans le cadre de la présente invention sont des terres de diatomée qui contiennent du carbonate de calcium ou des terres de diatomée auxquelles on rajoute du carbonate de calcium.

De préférence, la terre de diatomée contient au moins 1% de carbonate de calcium, et de préférence de 15% à 25% de carbonate de calcium.

Ainsi, la présente invention concerne notamment la croissance d'une phase cristalline à partir d'un sel de fer à la surface d'une terre de diatomée grâce au carbonate de calcium la composant, sans affecter ni son intégrité, ni sa structure, ni les groupements silanols présents à sa surface.

De préférence, les terres de diatomée utilisées dans le cadre de la présente invention sont des terres de diatomées brutes.

Le terme "terre de diatomée brute" désigne une terre de diatomée non calcinée, c'est-à-dire une terre de diatomée n'ayant pas subi de calcination au préalable. En effet, il est souhaitable d'utiliser une terre de diatomée brute telle que définie ci-dessus, étant donné que la calcination conduit à une condensation des groupements silanols sous forme de ponts siloxanes, ce qui limite fortement la réactivité de surface du squelette de diatomée. Par ailleurs, la calcination conduit à l'oxydation du carbonate de calcium.

Selon un mode de réalisation préféré, le matériau composite selon l'invention est caractérisé en ce que le fer est sous la forme d'halogénure, notamment chlorure ou bromure, de nitrate, de sulfate, de sulfonate, de phosphate, de carbonate, d'acétate, d'oxalate ou d'oxyde.

Selon un mode de réalisation particulier, le fer du matériau composite est du Fe(II).

Selon un mode de réalisation particulier, la terre de diatomée est choisie dans le groupe constitué des matériaux siliciques macroporeux d'algues eucaryotes fossilisées.

Dans les matériaux composites selon la présente invention, la phase cristalline est de préférence à base de fer (III) et présente une morphologie sphérique ou fibrillaire, ou se présente sous forme d'agrégats.

Les matériaux selon l'invention sont des composés siliciques macroporeux de type squelette de diatomée, modifiés comme mentionné ci-dessus, c'est-à-dire des matériaux de type squelette de diatomée comprenant une phase cristalline de fer, de préférence de fer (III).

Les matériaux composites de l'invention sont caractérisés en ce qu'ils comprennent une matrice à base de terre de diatomée associée à du carbonate de calcium et une phase cristalline à base de fer uniformément présente à la surface de ladite matrice.

Selon un mode de réalisation particulièrement avantageux, la phase cristalline des matériaux composites selon l'invention est à base de fer (III) et est constituée d'une phase unique à base d'oxyde de fer (III) ou d'un mélange de phases à base d'oxyde de fer (III) et/ou d'oxyhydroxyde de fer (III) .

Parmi les oxyhydroxydes de fer, on peut citer les phases lépidocrocite et goethite, leur formation dépendant des conditions opératoires mises en oeuvre. Ces deux espèces sont des oxydes hydroxydes de fer (III) ayant pour formule chimique commune FeO-(OH), mais un arrangement spatial légèrement différent. En effet, dans le cas de la phase *goethite* (a-FeO-(OH)), la structure tridimensionnelle calculée (A. Gualtieri and P. Venturelli, American Mineralogist, 1999, 84, 895-904) fait état d'un atome de fer se trouvant au centre d'un octaèdre (dipyramide) formé de 4 atomes d'oxygène et 2 atomes de fer, partageant au moins un côté et un sommet avec l'octaèdre plus proche voisin. La phase *lepidocrocite* (γ-FeO-(OH)) est décrite dans la littérature (R. W. G. Wyckoff, Crystal Structure. Second édition ed.; Interscience Publishers: New York, 1963; Vol. 1, p 290-295) comme un atome de fer au centre d'une bipyramide avec au sommet 3 atomes d'oxygène et 3 atomes de fer. Ainsi, chaque octaèdre partage un côté avec deux autres octaèdres plus proches voisins faisant des deux phases cristallines, *goethite* et *lepidocrocite*, des isomorphes de structure.

De préférence, dans les matériaux composites selon la présente invention, les oxydes de fer (III) susmentionnés sont choisis dans le groupe constitué de Fe₂O₃, de FeO(OH) et de Fe₃O₄.

Il existe un nombre important de polymorphes de l'oxyde de fer (III), comme α-Fe₂O₃ (hématite), β-Fe₂O₃, γ-Fe₂O₃ (maghémite), ε-Fe₂O₃ et Fe₂O₃ amorphe, en fonctions des conditions de synthèse employées (R. Cornel et U. Schwertmann, The iron oxides. In Structure, Properties, Reactions, Occurrence and Uses, VCH : Weinheim, 1996 ; R. Zboril, M. Mashlan et D. Petridis, Chem. Mater., 2002, 14, 969-982).

L'hématite est la forme oxyde la plus stable du point de vue thermodynamique. Par activation thermique à une température d'environ 380°C, il est relevé que les particules d'oxydes de fer (γ-Fe₂CO₃) s'agrègent pour former l'oxyde de fer (III) sous forme α-Fe₂O₃ (C. Chaneac, E. Tronc and J. P. Jolivet, Nanostructured Materials, 1995, 6, (5-8), 715-718).

Un matériau composite particulier selon l'invention est un matériau composite tel que défini ci-dessus, dans lequel la phase cristalline à base de fer (III) est constituée de maghémite (γ-Fe₂O₃)(composite A).

Un autre matériau composite particulier selon l'invention est un matériau composite tel que défini ci-dessus, dans lequel la phase cristalline à base de fer (III) est constituée de magnétite (Fe₃O₄)(composite A').

Un autre matériau composite particulier selon l'invention est un matériau composite tel que défini ci-dessus, dans lequel la phase cristalline à base de fer est constituée de goethite (α-FeO(OH))(composite B).

Un autre matériau composite particulier selon l'invention est un matériau composite tel que défini ci-dessus, dans lequel la phase cristalline à base de fer est constituée d'un mélange de goethite (α-FeO(OH)) et de lépidocrocite (γ-FeO(OH))(composite C).

La présente invention fait état de la formation de ces deux phases cristallines (goethite et lépidocrocite) à la surface de la terre de diatomée suivant plusieurs réactions faisant intervenir les ions hydroxyles libérés par solubilisation du carbonate de calcium.

Dans le cas du matériau composite terre de diatomée/lépidocrocite et terre de diatomée/goethite, la phase oxyhydroxyde de fer recouvre de manière homogène l'ensemble du matériau, la présence des phases à base de fer à la surface des terres de diatomée étant la résultante d'un ensemble.

Un autre matériau composite particulier selon l'invention est un matériau composite tel que défini ci-dessus, dans lequel la phase cristalline à base de fer est constituée d'hématite (α-Fe₂O₃)(composite D).

Un autre matériau composite particulier ne faisant pas partie de l'invention est un matériau composite tel que défini ci-dessus, dans lequel la phase à base de fer est constituée de Fe₂O₃ amorphe (composite E).

Selon un mode de réalisation particulier, le matériau composite de l'invention est caractérisé en ce qu'il a une capacité d'échange de cations comprise d'environ 7 à environ 300 meq/100 g.

La présente invention concerne également un procédé de préparation d'un matériau composite tel que défini ci-dessus, comprenant les étapes suivantes :
- une étape de mise en présence d'une solution aqueuse de terre de diatomée associée à du carbonate de calcium avec une solution aqueuse de fer (II), et
- une étape de récupération dudit matériau composite, notamment par centrifugation, filtration ou lyophilisation.

De préférence, le procédé tel que défini ci-dessus comprend une étape subséquente de traitement thermique dudit matériau composite.

Selon un mode de réalisation préféré, le procédé tel que défini ci-dessus est caractérisé en ce que la solution aqueuse de terre de diatomée présente une concentration en terre de diatomée comprise de 0,1 g.L⁻¹ à 100 g.L⁻¹, notamment de 1 g.L⁻¹ à 50 g.L⁻¹, et de préférence de 5 g.L⁻¹ à 20 g.L⁻¹.

Selon un mode de réalisation préféré, le procédé tel que défini ci-dessus est caractérisé en ce que la solution aqueuse de fer (II) présente une concentration en fer (II) comprise de 5.10⁻³ mol.L⁻¹ à 5.10⁻¹mol.L⁻1, notamment de 5.10⁻² mol.L⁻¹ à 10⁻¹ mol.L⁻¹, et de préférence égale à 2,5.10² mol.L⁻¹.

La présente invention concerne un procédé tel que défini ci-dessus, pour la préparation d'un matériau composite, dans lequel la phase cristalline à base de fer (III) est constituée de maghémite (γ-Fe₂O₃) (composite A), ledit procédé étant caractérisé en ce qu'il comprend :
- une étape de mise en présence de la terre de diatomée avec une solution aqueuse de fer (II) pour obtenir un mélange de terre de diatomée et de solution aqueuse de fer,
- une étape d'agitation du mélange ainsi formé pendant 1 heure à 72 heures, notamment de 2 heures à 48 heures, de préférence de 3 heures à 10 heures, et préférentiellement de 3 heures à 5 heures, à une température comprise de 25°C à 100°C, notamment de 40°C à 90°C, et de préférence de 60°C à 80°C, suivie d'une étape d'agitation à température ambiante de 1 h à 24 heures, et préférentiellement pendant 1 heure à 16 heures ;
- une étape de traitement thermique, notamment par séchage, pendant 12 heures à 48 heures, notamment de 12 heures à 24 heures, de préférence de 12 heures à 18 heures, et préférentiellement pendant 12 heures, à une température comprise de 25°C à 80°C, notamment de 25°C à 70°C, et de préférence à une température de 60°C, et
- une étape de récupération du matériau composite ainsi obtenu.

La présente invention concerne un procédé tel que défini ci-dessus, pour la préparation d'un matériau composite, dans lequel la phase cristalline à base de fer (III) est constituée de goethite (α-FeO(OH))(composite B), ledit procédé étant caractérisé en ce qu'il comprend :
- une étape de mise en présence de la terre de diatomée avec une solution aqueuse de fer (II) pour obtenir un mélange de terre de diatomée et de solution aqueuse de fer,
- une étape d'agitation du mélange ainsi formé pendant 1 heure à 72 heures, notamment de 2 heures à 48 heures, de préférence de 3 heures à 10 heures, et préférentiellement pendant 7 heures, à une température comprise de 10°C à 100°C, et de manière préférée de 15°C à 50°C, et préférentiellement de 15°C à 35°C ;
- une étape de traitement thermique, par exemple dans un flacon en polypropylène, pendant 2 heures à 48 heures, notamment de 2 heures à 24 heures, et de préférence 12 heures, à une température comprise de 50°C à 120°C, notamment de 40°C à 110°C, et de préférence à une température de 60°C à 100°C, et
- une étape de récupération du matériau composite ainsi obtenu.

La présente invention concerne un procédé tel que défini ci-dessus, pour la préparation d'un matériau composite, dans lequel la phase cristalline à base de fer est constituée d'un mélange de goethite (α-FeO(OH)) et de lépidocrocite (γ-FeO(OH))(composite C), ledit procédé étant caractérisé en ce qu'il comprend :
- une étape de mise en présence de la terre de diatomée avec une solution aqueuse de fer (II) pour obtenir un mélange de terre de diatomée et de solution aqueuse de fer,
- une étape d'agitation du mélange ainsi formé pendant 1 heure à 24 heures, et de préférence pendant 1 heure à 12 heures, et préférentiellement pendant 7 heures, à une température comprise de 5°C à 100°C, et de préférence de 5°C à de 40°C, et préférentiellement à température ambiante, et
- une étape de récupération du matériau composite ainsi obtenu.

La présente invention concerne un procédé tel que défini ci-dessus, pour la préparation d'un matériau composite, dans lequel la phase cristalline à base de fer est constituée d'hématite (α-Fe₂O₃)(composite D), ledit procédé étant caractérisé en ce qu'il comprend :
- une étape de traitement thermique du matériau composite C tel que défini ci-dessus, pendant 1 heure à 8 heures, et de préférence pendant 30 minutes à 3 heures, et préférentiellement pendant 2 heures, à une température comprise de 200°C à 1000°C, et de préférence de 700°C à 900°C, et préférentiellement à une température de 700°C, et
- une étape de récupération du matériau composite ainsi obtenu.

Un procédé ne faisant pas partie de l'invention est également décrit pour la préparation d'un matériau composite, dans lequel la phase à base de fer est constituée de Fe₂O₃ amorphe (composite E), ledit procédé étant caractérisé en ce qu'il comprend :
- une étape de traitement thermique du matériau composite C tel que défini ci-dessus, pendant 30 minutes à 4 heures, et notamment pendant 2 heures, à une température comprise de 100°C à 400°C, et notamment à une température de 200°C à 300°C, et en particulier à 250°C, et
- une étape de récupération du matériau composite ainsi obtenu.

La présente invention concerne également l'utilisation d'un matériau composite tel que défini ci-dessus, pour la décontamination des sols et eaux contaminés par des cations, notamment des cations de métaux lourds, pour la rétention de contaminants anioniques ou cationiques ou d'oxyanions de type arsenic, ou en tant qu'échangeur ionique, fertilisant, agent anti-bactérien, fongicide, catalyseur ou additif de peinture.

Le champ d'application des matériaux composites selon l'invention est relativement étendu. On peut notamment envisager des applications dans le domaine de la haute technologie (micro-optique, bioprocessing, catalyse) où il apparaît que les propriétés du matériau, notamment les propriétés magnétiques, sont directement liées à la nature de la phase cristalline de l'oxyde de fer considérée. Cependant, c'est dans le domaine de la rétention de métaux lourds, tels que le cadmium, mais plus particulièrement de l'arsenic sous ses deux degrés d'oxydation (As(III) et As(V)) que les matériaux composites de l'invention présentent un grand potentiel. Les propriétés de rétention sont attenantes non seulement aux conditions opératoires, dont la principale est le pH du système, mais aussi à la granulométrie des particules d'oxydes de fer utilisées.

### Description détaillée des protocoles de synthèse

Les protocoles de synthèse des composites les plus représentatifs sont décrits ci-après.

### 1) Terre de diatomée - oxyhydroxyde de fer (III)

Le protocole de synthèse de la présente invention relatif au composite terre de diatomée - oxyhydroxyde de fer (III) est décrit ci-dessous. La composition chimique exprimée en masse de la terre de diatomée initiale en vue de synthétiser le composite mixte est la suivante :
*a% SiO₂, b% Al₂O₃, c% CaCO₃*
où a est compris de 60 à 95 ; b est compris de 5 à 25 et c est compris de 0 à 40.

Cette terre de diatomée (masse comprise de 0,5 g à 10,0 g) est mise en suspension dans un bécher contenant un volume d'eau distillée compris entre 50 mL et 500 mL. Dans un deuxième bêcher, une solution aqueuse de sel de fer, tel que le sulfate de fer (II) ou le chlorure de fer (III), de concentration comprise de 1.10⁻³ mol.L⁻¹ à 1 mol.L⁻¹ est préparée dans un volume d'eau distillée compris entre 50 mL et 500 mL. De manière préférée, la solution de fer présente une concentration comprise de 5.10⁻³ mol.L⁻¹ à 5.10⁻¹ mol.L⁻¹ en dissolvant la masse de sel de fer correspondante dans un volume compris entre 200 mL et 500 mL d'eau distillée. Après un temps d'agitation compris entre 10 minutes et 2 heures, la solution de fer (II) est ajoutée à la solution de terre de diatomée sous agitation durant un temps de contact compris de 5 minutes à 48 heures à une température comprise de 5°C à 200°C. De manière préférée, le temps de contact est limité à un intervalle de 1 heure à 24 heures alors que la température est fixée dans la gamme comprise de 5°C à 100°C.

De manière encore plus préférée, les conditions opératoires considérées sont arrêtées à un temps de synthèse s'échelonnant de 1 heure à 12 heures et une température comprise entre 5°C et 40°C.

Au cours de la réaction, le pH est contrôlé par ajout d'acide chlorhydrique ou sulfurique de concentration 0,05 mol.L⁻¹ afin de rester dans un domaine pH-métrique compris entre 2 et 10, mais de manière préférentielle, le domaine de pH peut être restreint à une gamme allant de 4 à 9 unités pH-métriques.

A l'issue du temps de contact, le composite ainsi préparé est alors récupéré selon deux méthodes. La première consiste à centrifuger le mélange réactionnel à une vitesse de 20 000 tours/minute. Le surnageant est alors éliminé alors que le produit est lavé à l'eau distillée. L'entière opération est réitérée 3 fois. La deuxième méthode considérée est la filtration dite sur Büchner, où le composite est séparé des eaux mères par filtration sur papier filtre.

De même, deux différentes méthodes de séchage sont mises en application. D'une part, on peut mettre en oeuvre le séchage en étuve où, dans un tel cas, le matériau final est placé à une température comprise de 30°C à 100°C durant 12 heures à 24 heures. Préférentiellement, la température est fixée à une température dans la gamme comprise de 40°C à 100°C. D'autre part, le composite peut être séché par lyophilisation, dont le principe consiste à éliminer l'eau à très basse température tout en maintenant un vide poussé. Le composite est mis à lyophiliser durant un temps de 24 heures.

### 2) Terre de diatomée - oxyde de fer (III)

Le protocole de synthèse relatif au composite de type terre de diatomée - oxyde de fer est présenté ici. Le matériau initial utilisé est un matériau composite de type terre de diatomée - oxyhydroxyde de fer (III) dont le protocole de synthèse a été complètement décrit ci-dessus. La composition chimique exprimée sous forme d'oxyde, et en masse du matériau utilisé en vue de synthétiser le composite mixte est la suivante :
*a% SiO₂, b% Fe₂O₃*
où a est compris de 30 à 70 et b est compris de 20 à 50.

Ce matériau est placé en four à calciner et soumis à un programme de montée en température dans une gamme de vitesse de montée de 0,5°C/min à 10,0°C/min pour une température finale comprise de 200°C à 1 000°C pendant un temps à la température pallier allant de 1 heure à 8 heures. De manière préférée, le traitement thermique est opéré à une température comprise de 700°C à 900°C, à raison d'une vitesse de montée, comprise de 5°C/min à 10°C/min pendant une durée de 30 minutes à 3 heures. Le cas échéant, le matériau peut être remis en solution pour élimination de produit secondaire, tel que le sulfate de calcium sous sa forme déshydratée (l'anhydrite), sous agitation dans un volume d'eau distillée de 50 mL à 500 mL, mais de manière préférée dans une gamme de 100 mL à 300 mL, à température ambiante, pendant une durée variable de 1 heure à 5 heures, mais de manière préférée, pendant une durée comprise de 1 heure à 3 heures. Par la suite, la solution est laissée décanter à température ambiante permettant d'éliminer les composés les plus solubles, dont fait partie l'anhydrite. Le matériau est ensuite dispersé en solution dans l'eau distillée, en considérant un volume de 50 mL à 500 mL, mais de manière préférée dans une gamme de 100 mL à 300 mL, avant de le filtrer sur Büchner et de la placer en étuve à une température allant de 60°C à 100°C.

### FIGURES

Figure 1 : Diffractogramme de rayons X du composite A de l'exemple 1 (terre de diatomée / maghémite).
Figure 2 : Clichés par microscope électronique à balayage (MEB) du composite A de l'exemple 1 (terre de diatomée / maghémite).
Figure 3 : Diffractogramme de rayons X du composite B de l'exemple 2 (terre de diatomée / goethite).
Figure 4 : Clichés par microscope électronique à balayage (MEB) du composite B de l'exemple 2 (terre de diatomée / goethite).
Figure 5 : Diffractogramme de rayons X du composite C de l'exemple 3 (terre de diatomée / goethite + lépidocrocite).
Figure 6 : Clichés par microscope électronique à balayage (MEB) du composite C de l'exemple 3 (terre de diatomée / goethite + lépidocrocite).
Figure 7 : Diffractogramme de rayons X du composite D de l'exemple 4 (terre de diatomée / hématite).
Figure 8 : Clichés par microscope électronique à balayage (MEB) du composite D de l'exemple 4 (terre de diatomée / hématite).
Figure 9 : Diffractogramme de rayons X du composite E de l'exemple 5 (terre de diatomée / Fe₂O₃ amorphe) ne faisant pas partie de l'invention.
Figure 10 : Clichés par microscope électronique à balayage (MEB) du composite E de l'exemple 5 (terre de diatomée / Fe₂O₃ amorphe) ne faisant pas partie de l'invention.

Sans que l'on veuille la limiter d'une quelconque façon, la présente invention va être d'avantage illustrée par les exemples suivants.

### EXEMPLES

### Exemple 1

### Préparation du composite à partir de terre de diatomée et d'une solution de sulfate de fer (II) (composite A)

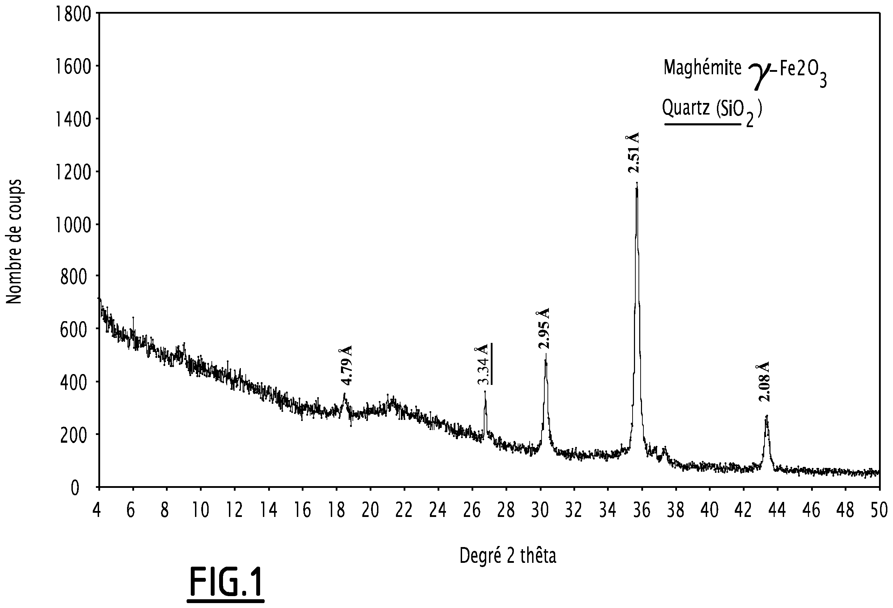

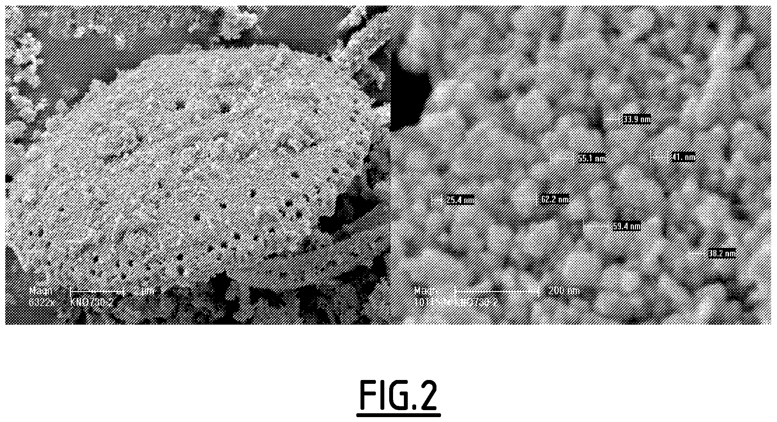

1 g de terre de diatomée (composition massique : 70% SiO₂, 5% Al₂O₃ et 25% CaCO₃ ; surface spécifique (SBET) environ égale à 10 m².g⁻¹) est mis en suspension dans un bécher contenant 100 mL d'eau distillée sous agitation. Dans un deuxième bécher de 100 mL, une solution aqueuse 0,05 molaire de sulfate de fer (II) est préparée. Après 1 heure d'agitation, la solution de fer (II) est ajoutée à la solution de terre de diatomée sous agitation à une température de 70°C pendant 3 heures. A l'issue de ce temps, le système est laissé sous agitation pendant encore 8 heures. Le matériau de couleur sombre est récupéré par filtration sur Büchner et mis à sécher en étuve pendant une durée de 24 heures à 60°C. La diffraction de rayons X réalisée sur le matériau fait apparaître une unique phase cristalline à base de fer (III), identifiés comme la maghémite (Figure 1). L'analyse par fluorescence X opérée sur le matériau permet d'estimer la masse de fer présent dans la composition chimique de la terre de diatomée, dans ce cas environ 25% en masse du composite. Les clichés de microscopie à balayage (Figure 2) montrent la présence de la phase à base de fer à la surface de la terre de diatomée. Enfin, le composite ainsi obtenu présente une surface spécifique (SBET) de l'ordre d'environ 25 m².g⁻¹.

### Exemple 2

### Préparation du composite à partir de terre de diatomée et d'une solution de sulfate de fer (II) (composite B)

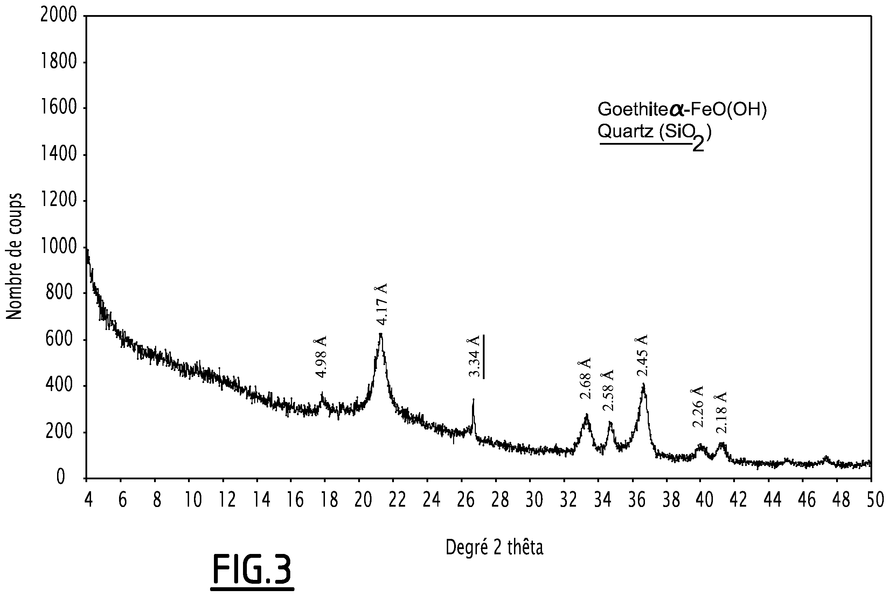

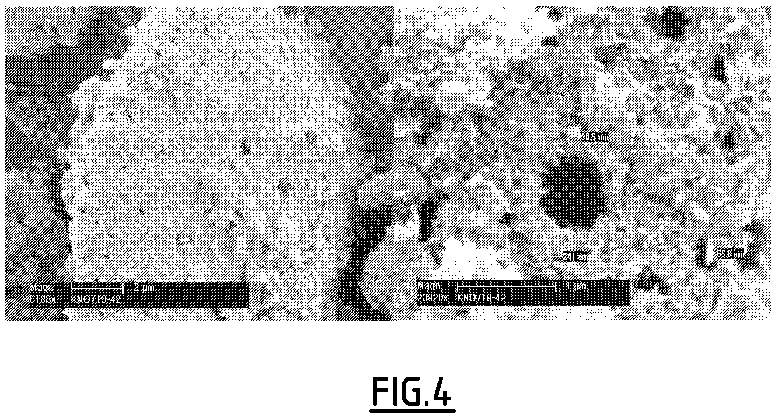

1 g de terre de diatomée (composition massique : 70% SiO₂, 5% Al₂O₃ et 25% CaCO₃ ; surface spécifique (SBET) environ égale à 10 m².g⁻¹) est mis en suspension dans un bécher contenant 100 mL d'eau distillée sous agitation. Dans un deuxième bécher de 100 mL, une solution aqueuse 0,05 molaire de sulfate de fer (II) est préparée. Après 30 minutes d'agitation, la solution de fer (II) est ajoutée à la solution de terre de diatomée sous agitation à température ambiante pendant 8 heures, le matériau de couleur marron clair est ensuite transféré dans des flacons de polypropylène et placé en étuve à 90°C pendant 12 heures. Le matériau est ensuite séparé de la solution par filtration sur Büchner et mis à sécher en étuve pendant une durée de 12 heures à 50°C. La diffraction de rayons X réalisée sur le matériau fait apparaître une phase cristalline à base de fer (III) unique, de type goethite (Figure 3). L'analyse par fluorescence X opérée sur le matériau permet d'estimer la masse de fer présent dans la composition chimique de la terre de diatomée, dans ce cas environ 27% en masse du composite. Les clichés de microscopie à balayage (Figure 4) montrent la présence de la phase à base de fer à la surface de la terre de diatomée. Enfin, le composite ainsi obtenu présente une surface spécifique (SBET) de l'ordre d'environ 45 m².g⁻¹.

### Exemple 3

### Préparation du composite à partir de terre de diatomée et d'une solution de sulfate de fer (II) (composite C)

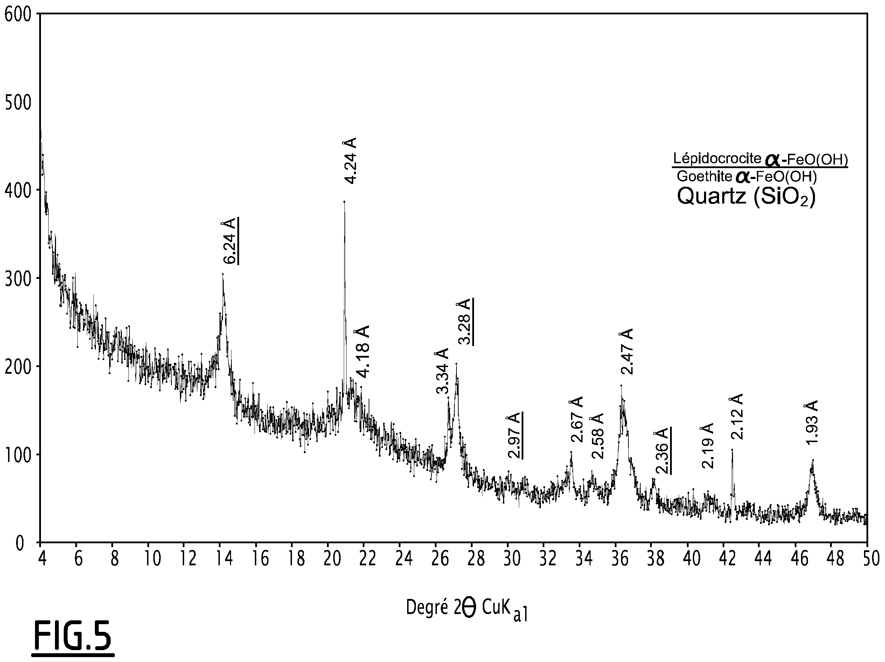

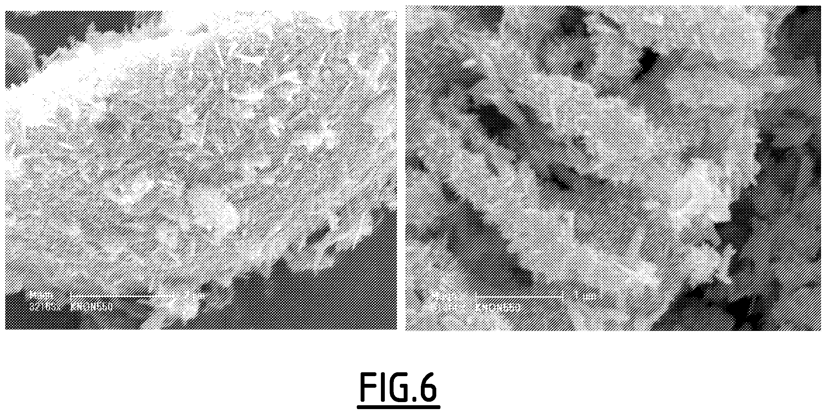

5 g de terre de diatomée (composition massique : 70% SiO₂, 5% Al₂O₃ et 25% CaCO₃ ; surface spécifique (SBET) environ égale à 10 m².g⁻¹) sont mis en suspension dans un bécher contenant 500 mL d'eau distillée sous agitation. Dans un deuxième bécher de 500 mL, une solution aqueuse 0,05 molaire de sulfate de fer (II) est préparée. Après 1 heure d'agitation, la solution de fer (II) est ajoutée à la solution de terre de diatomée sous agitation à température ambiante pendant 8 heures, le matériau de couleur marron clair est récupéré par filtration sur Büchner et mis à sécher en étuve pendant une durée de 24 heures à 30°C. La diffraction de rayons X réalisée sur le matériau fait apparaître deux phases cristallines de type oxyhydroxyde de fer (III) identifiées comme la goethite et la lépidocrocite (Figure 5). L'analyse par fluorescence X opérée sur le matériau permet d'estimer la masse de fer présent dans la composition chimique de la terre de diatomée, dans ce cas environ 30% en masse du composite. Les clichés de microscopie à balayage (Figure 6) montrent la présence de la phase à base de fer à la surface de la terre de diatomée. Enfin, le composite ainsi obtenu présente une surface spécifique (SBET) de l'ordre d'environ 50 m².g⁻¹.

### Exemple 4

### Préparation du composite terre de diatomée / oxyde de fer (III) à partir du composite terre de diatomée - oxyhydroxyde de fer (III) (composite D)

1 g de terre de diatomée - oxyhydroxyde de fer (III) (composition massique des principaux composants, exprimée sous forme d'oxyde : 60% SiO₂, 40% Fe₂O₃) est placé dans un creuset puis en étuve pour calcination. Le programme considéré consiste à une montée à 700°C pendant deux heures (i.e. une vitesse de montée de 5,83°C/minute), où le matériau reste à la température pallier pendant une durée de 1 heure. Le matériau est ensuite laissé refroidir à température ambiante, puis placé dans 100 mL d'eau distillée sous agitation vigoureuse pendant 2 heures. Après décantation de la solution, le surnageant est éliminé, le solide est remis en solution dans 100 mL d'eau distillée avant d'être filtré sur Büchner. Le matériau est finalement mis à sécher en étuve à une température de 80°C.

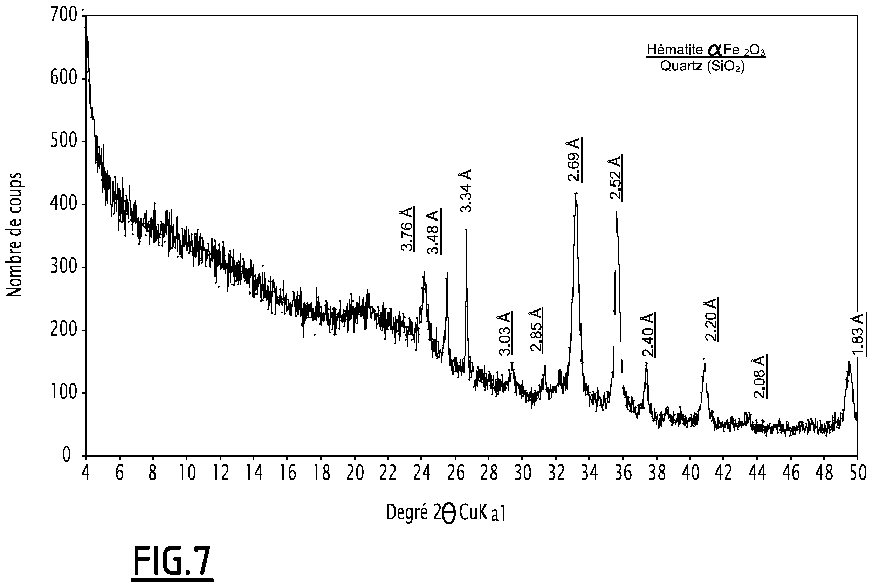

La diffraction de rayons X réalisée sur le matériau ainsi obtenu permet d'observer l'apparition d'une nouvelle phase cristalline identifiée comme l'hématite (Figure 7), un oxyde de fer (III) de type α de formule chimique α-Fe₂O₃.

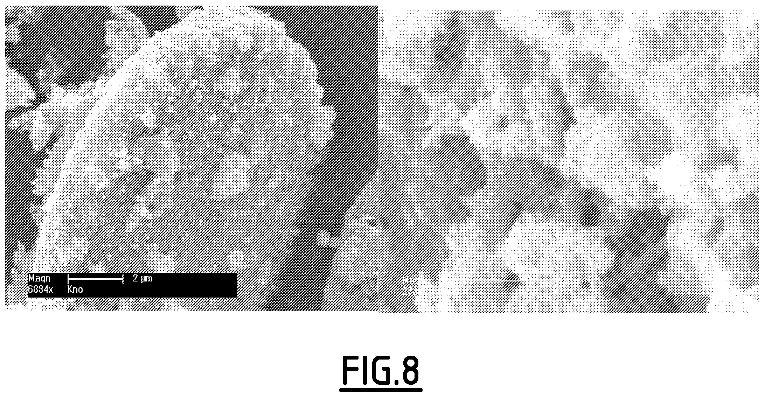

Les clichés de microscopie à balayage (Figure 8) montrent la présence de particules de α-Fe₂O₃ de dimension nanométrique.

Enfin, le composite ainsi obtenu présente une surface spécifique (SBET) de l'ordre d'environ 15 m².g⁻¹.

### Exemple 5 (ne faisant pas partie de l'invention)

### Préparation du composite terre de diatomée / oxyde de fer (III) à partir du composite terre de diatomée - oxyhydroxyde de fer (III) (composite E)

Une masse de 5 g de composite terre de diatomée - oxyhydroxyde de fer (III) (composition massique exprimée sous forme d'oxyde : 60% SiO₂, 40% Fe₂O₃), où la phase à base de fer (III) est identifiée comme un mélange de goethite et lépidocrocite, est mise à calciner en four à une température de 250°C. Le programme thermique utilisé inclut une montée en température pendant 2 heures suivie d'un palier à 250°C pendant 2 heures. Après retour de la température à l'ambiante, le matériau est placé dans 500 mL d'eau distillée sous agitation vigoureuse pendant 2 heures. Après décantation de la solution, le surnageant est éliminé, le solide est remis en solution dans 500 mL d'eau distillée avant d'être filtré sur Büchner. Le matériau est finalement mis à sécher en étuve à une température de 80°C.

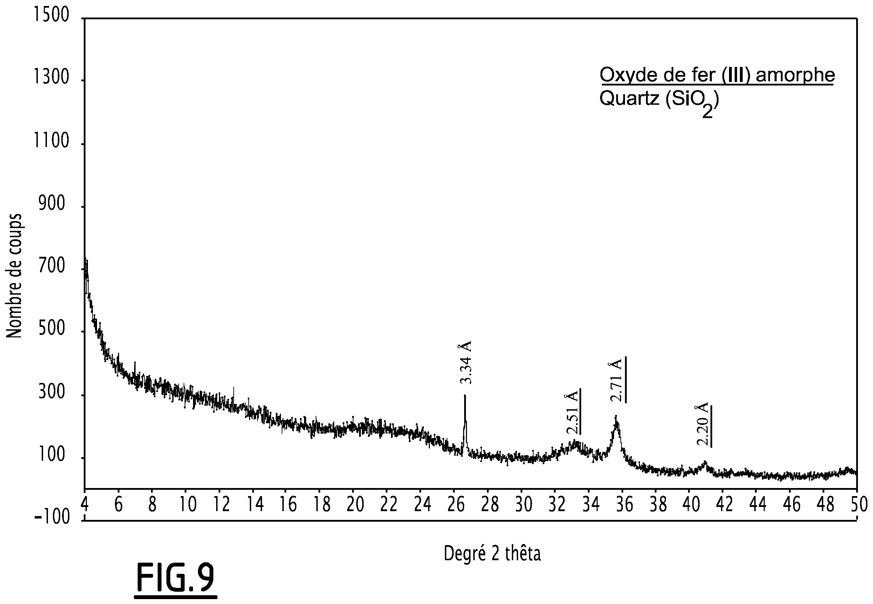

La diffraction de rayons X réalisée sur le matériau ainsi obtenu ne met en évidence aucune phase cristalline à base de fer (III) particulière (Figure 9), permettant de conclure à l'obtention d'oxyde de fer (III) amorphe.

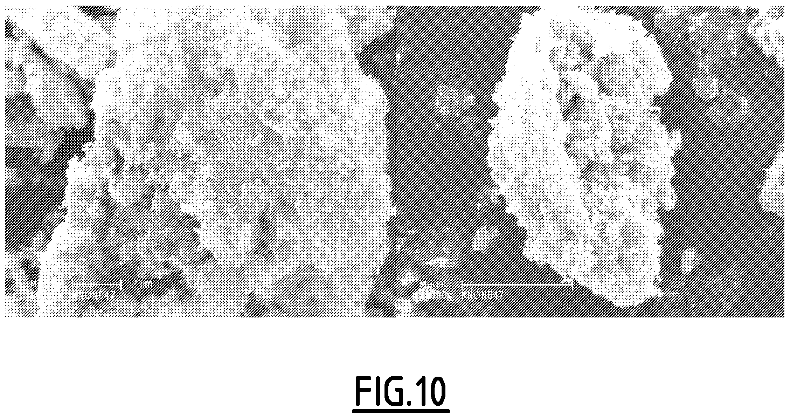

Les clichés de microscopie à balayage (Figure 10) illustrent cependant la présence de ces particules à la surface des frustules de diatomée.

Enfin, le composite ainsi obtenu présente une surface spécifique (SBET) de l'ordre d'environ 60 m².g⁻¹.

### Exemple 6 - Tests de rétention des espèces arsénites

Il est connu que les espèces As(III) (arsénites) et As(V) (arséniates) s'adsorbent facilement sur les oxydes de fer (III) dans des conditions particulières. Ces oxydes de fer sont donc souvent utilisés dans l'atténuation des effets de l'arsenic dans les sols et sédiments lacustres (B. A. Manning, S. E. Fendorf and S. Goldberg, Environmental Science and Technology, 1998, 32, (16), 2383-2388 ; B. A. Manning and S. Goldberg, Environmental Science and Technology, 1997, 31, (7), 2005-2011 ; K. A. Sullivan and R. C. Aller, Geochimica et Cosmochimica Acta, 1996, 60, (9), 1465-1477).

Ces observations permettent d'envisager une application des composites à base de phase au fer (III), que sont les terres de diatomée / mélange oxyhydroxydes de fer (III) (composite C), terres de diatomée / goethite (composite B), terres de diatomée / hématite (composite D) et terres de diatomée / maghémite (composite A).

L'évaluation de la capacité de rétention des espèces arsénites en solution (arsenic sous un degré d'oxydation +III) par ces composites, les conditions expérimentales, ainsi que le mécanisme de rétention sont décrits ci-après. Les propriétés de rétention de ces matériaux seront comparées à celles d'autres adsorbants.

### 1. Matériel et Méthodes

### 1.1. Matériel

Les tests de mise en contact de l'arsenic avec les composites suivent un mode expérimental couramment utilisé dans la littérature (J. Gimenez, M. Martinez, J. de Pablo, M. Rovira and L. Duro, Journal of Hazardous Materials, 2007, 141, (3), 575 ; V. Lenoble. Elimination de l'Arsenic pour la production d'eau potable: oxydation chimique et adsorption sur des substrats solides innovants. Faculté des Sciences et Techniques de Limoges, 2003)**.**

Les solutions utilisées sont des solutions d'arsenic (III) préparées à partir de NaAsO₂ (> 99%, Fluka), de concentration initiale d'environ 10⁻² M, les solutions filles sont préparées juste avant emploi par dilution de ces solutions mères. Les solutions concentrées de H₂SO₄ et NaOH utilisées pour fixer le pH sont de qualité Pour Analyse (Prolabo). Les mesures de concentration en arsenic total sont réalisées par absorption atomique à flamme (GFAAS) à l'aide d'un spectrophotomètre Varian SpectrAA 800. Toutes les mesures sont réalisées à 193,7 nm avec une lampe à cathode creuse (Varian). Le modificateur utilisé est un mélange palladium-magnésium. Le gaz vecteur est un mélange air / acétylène (AGA, > 99%). La température de dissociation est de 1400°C, la température d'atomisation de 2500°C. La précision de l'analyse est de 5%, la déviation standard de ± 7% (mesuré par des tests de répétabilité).

Le domaine de mesure s'étendant de 5 à 100 ppm pour le tracé des isothermes d'adsorption, une gamme d'étalons d'arsenic (III), de concentrations équivalentes à celle du domaine de mesure, a été réalisée à partir d'une solution mère standard de NaAsO₂ (Fluka, 1000 ppm). Les étalons sont conservés au maximum 1 semaine à température ambiante en flacons de 50 mL.

### 1.2. Mode opératoire

Pour chaque matrice étudiée (composites A, B, C et D), une concentration d'environ 2 g solide/L est choisie. Chaque solide est mélangé avec 100 mL de solution d'arsenic dans des béchers et mis à agiter à température ambiante pendant 24 heures. Le solide est séparé de la solution par filtration sur Büchner et la concentration en arsenic dans les eaux mères est évaluée par absorption atomique. Par différence, la quantité d'arsenic dans le composite est calculée. En faisant varier la concentration en arsenic en solution, la capacité de rétention des différents composites en fonction de la concentration en arsenic en solution peut être évaluée, et les propriétés de rétention mises en évidence en mettant en application les différents modèles des isothermes.

Les expériences sont menées au pH d'auto-équilibre de chaque matrice (pH non fixé). Dans un second temps, le pH est fixé de façon à obtenir des isothermes d'adsorption en milieu acide (pH ≤ 4) ; le pH des suspensions solides arsenic est alors ajusté avec des solutions d'hydroxyde de sodium ou d'acide sulfurique diluées.

### 2. Résultats

La concentration en ions arsénites est fixée à 10⁻³ M en solution soit une concentration initiale en arsenic (III) de 70 ppm. Le pH de la solution est quant à lui variable au cours du temps (entre 7,5 et 8,0). Suite à l'expérimentation, l'analyse par diffraction de rayons X n'indique aucune modification structurale, indépendamment de la nature du matériau. Les capacités de rétention de l'arsenic exprimées en milligramme d'arsenic par gramme de composite ainsi que le pourcentage d'arsenic retenu sont présentées dans le tableau ci-après en fonction du composite considéré.

| Composite | pH | Surface (m²/g) | Pourcentage rétention (%) | % Fe en masse | Capacité rétention *q₁* (mg/g composite) | Capacité rétention *q₂* (mg/g Fe) |
|---|---|---|---|---|---|---|
| Tdt / mélange FeOOH (composite C) | 7,70 | 49 | 45,5 | 30,0 | 11,5 | 38,3 |
| Tdt / goethite (composite B) | 7,80 | 45 | 29,9 | 27,0 | 9,6 | 35,5 |
| Tdt / maghémite (composite A) | 7,95 | 23 | 24,1 | 25,0 | 6,1 | 24,4 |
| Tdt / hématite (composite D) | 6,40 | 20 | 8,9 | 25,0 | 3,0 | 12,1 |

Une capacité de rétention maximale des espèces arsénites est obtenue pour les deux composites formés d'oxyhydroxydes de fer (III), avec dans le cas du mélange, plus de 11 mg/g de composite (composite C) et pour la phase goethite (composite B), 9,6 mg/g. Les composites à base d'oxyde de fer (III) retiennent quant à eux des quantités d'arsenic inférieures à celles des oxyhydroxydes de fer (III), avec pour la phase hématite (composite D), environ 3,0 mg/g et la maghémite (composite A) 6,1 mg/g. Les résultats obtenus indiquent une forte affinité des espèces arsenic (III) pour les oxyhydroxydes de fer (III) par rapport aux oxydes de fer (III), montrant l'importance de la nature de la phase au fer (III) quant à la rétention de l'arsenic.

Ces résultats permettent de constater qu'à concentration équivalente, le composite terre de diatomée / mélange d'oxyhydroxydes de fer (III) (FeOOH) (composite C) possède la meilleure capacité de rétention en comparaison aux autres composites testés pour une iso-concentration.

On constate également l'importance de la valeur de surface spécifique du composite utilisé.

### 3. Comparaison avec d'autres matériaux adsorbants

Les tests de rétention ont montré que l'ensemble des composites à base de fer (III) retiennent les espèces arsénites dans différentes proportions. L'étude s'est plus particulièrement focalisée sur la terre de diatomée / mélange oxyhydroxyde de fer (III) (composite C), composite pour lequel la capacité de rétention maximale sur une gamme de concentrations en arsenic de 10 à 100 ppm, a été évaluée à 15,7 mg/g de composite à pH compris entre 7,5 et 8,0. Cette capacité atteint une valeur de 21,2 mg/g de composite, soit 70 mg d'arsenic par gramme de fer. Le fait de se rapporter à la masse en fer constituant le composite permet une meilleure comparaison des propriétés de rétention entre matériaux à base d'élément métallique.

Le tableau ci-après présente un ensemble de matériaux adsorbants non exhaustifs, avec leur capacité de rétention exprimée par gramme d'élément métallique (M), à pH donné.

| Adsorbant | pH | Gamme de concentrations (ppm) | Pourcentage M (%) | Capacité As(III) (mg/g M) |
|---|---|---|---|---|
| Goethite pure | 9 | 0-70 | 62,0 | 35,0 |
| Rouille rouge (Bauxsol™) | 4.5 | 150 | 23,8 | 2,3 |
| Oxyde de titane (TiO₂) (Degussa™) | 4.0 | < 110 | 59,9 | 5,7 |
| Oxyde de fer (III) amorphe | 9.0 | 0-60 | 69,9 | 40,0 |
| Montmorillonite - Feₓ(OH)_{y} | 9.0 | 0-60 | - | 13,0 |
| Terre de diatomée / oxyhydroxydes Fe (III) | 9,0 | 5-100 | 30,0 | **70,1** |
| Terre de diatomée / oxyde de fer (III) amorphe | 7,8 | 5-100 | 25,2 | **95,2** |
| Terre de diatomée / oxyde de fer (III) amorphe | 8,5 | - | 25,0 | 115,1 |
| Oxyde de fer (III) / MnO₂ | 3 | 5-600 | 31,5 | 44,5 |

Indépendamment du pH, les meilleures propriétés de rétention sont obtenues pour les composites terre de diatomée / oxyhydroxydes de fer (III) et plus précisément ceux constitués d'oxydes de fer (III) amorphe. Ces résultats s'expliquent du fait du caractère amorphe de la phase au fer (III), générant une surface spécifique disponible importante. En outre, les squelettes de diatomée semblent jouer un rôle important. En effet, la phase au fer (III) étant fixée à la surface du matériau silicique, la surface de contact totale du composite est supérieure en comparaison à un matériau oxyde de fer (III) seul. En se référant au tableau ci-dessus, cette hypothèse est confortée en comparant les capacités de rétention maximales relevées pour des oxydes de fer (III) amorphes (q = 40 mg/g Fe) à celles des composites terres de diatomée / oxydes de fer (III) amorphes (q₁ = 95,2 mg/g Fe et q₂ = 115,1 mg/g Fe), sur un domaine de pH quasi équivalents.

En conclusion, la comparaison des propriétés de rétention du composite terre de diatomée / oxyhydroxydes de fer (III) avec d'autres matériaux adsorbants permet de situer le composite dans la moyenne haute des matériaux adsorbants en termes de rétention des espèces arsénites.

## Revendications

1. Matériau composite comprenant de la terre de diatomée associée à du carbonate de calcium et une phase cristalline à base de fer, **caractérisé en ce que** ladite phase cristalline est présente uniquement à la surface de ladite terre de diatomée.

2. Matériau composite selon la revendication 1, **caractérisé en ce que** la terre de diatomée est brute.

3. Matériau composite selon la revendication 1 ou 2, **caractérisé en ce que** le fer est sous la forme d'halogénure, nitrate, sulfate, sulfonate, phosphate, carbonate, acétate, oxalate ou oxyde.

4. Matériau composite selon l'une quelconque des revendications 1 à 3, **caractérisé en ce que** la terre de diatomée est choisie dans le groupe constitué des matériaux siliciques macroporeux d'algues eucaryotes fossilisées.

5. Matériau composite selon l'une quelconque des revendications 1 à 4, **caractérisé en ce que** la phase cristalline est constituée d'une phase unique à base d'oxyde de fer (III) ou d'un mélange de phases à base d'oxyde de fer (III) et/ou d'oxyhydroxyde de fer (III).

6. Matériau composite selon la revendication 5, **caractérisé en ce que** les oxydes de fer (III) sont choisis dans le groupe constitué de Fe₂O₃, de FeO(OH) et de Fe₃O₄.

7. Matériau composite selon la revendication 5 ou 6, **caractérisé en ce que** la phase cristalline est à base de fer (III) et est constituée de maghémite, de magnétite, de goethite, d'un mélange de goethite et de lépidocrocite ou d'hématite.

8. Matériau composite selon l'une quelconque des revendications 1 à 7, **caractérisé en ce qu'**il a une capacité d'échange de cations comprise d'environ 7 à environ 300 meq/100 g.

9. Procédé de préparation d'un matériau composite selon l'une quelconque des revendications 1 à 8, comprenant les étapes suivantes :
- une étape de mise en présence d'une solution aqueuse de terre de diatomée associée à du carbonate de calcium avec une solution aqueuse de fer (II), et
- une étape de récupération dudit matériau composite, notamment par centrifugation, filtration ou lyophilisation.

10. Procédé selon la revendication 9, comprenant une étape subséquente de traitement thermique dudit matériau composite.

11. Utilisation d'un matériau composite selon l'une quelconque des revendications 1 à 8, pour la décontamination des sols et eaux contaminés par des cations, notamment des cations de métaux lourds, pour la rétention de contaminants anioniques ou cationiques ou d'oxyanions de type arsenic, ou en tant que échangeur ionique, fertilisant, agent anti-bactérien, fongicide, catalyseur ou additif de peinture.

## Patentansprüche

1. Verbundmaterial, eine Diatomeenerde enthaltend, die einem Calciumcarbonat und einer kristallinen Phase auf Basis von Eisen zugeordnet ist, **dadurch gekennzeichnet, dass** die kristalline Phase nur an der Oberfläche der Diatomeenerde vorhanden ist.

2. Verbundmaterial nach Anspruch 1, **dadurch gekennzeichnet, dass** die Diatomeenerde roh ist.

3. Verbundmaterial nach Anspruch 1 oder 2, **dadurch gekennzeichnet, dass** das Eisen in Form eines Halogenids, Nitrats, Sulfats, Sulfonats, Phosphats, Carbonats, Azetats, Oxalats oder Oxids vorhanden ist.

4. Verbundmaterial nach einem beliebigen der Ansprüche 1 3, **dadurch gekennzeichnet, dass** die Diatomeenerde ausgewählt ist aus der Gruppe, die gebildet ist aus makroporösen Siliziummaterialien von fossilen eukaryotischen Algen.

5. Verbundmaterial nach einem beliebigen der Ansprüche 1 bis 4, **dadurch gekennzeichnet, dass** die kristalline Phase gebildet ist aus einer einzigen Phase auf Basis von Eisenoxid (III) oder einer Mischung von Phasen auf Basis von Eisenoxid (III) und/oder von Eisenoxyhydroxid (III).

6. Verbundmaterial nach Anspruch 5, **dadurch gekennzeichnet, dass** die Eisenoxide (III) ausgewählt sind aus der Gruppe, die gebildet ist aus Fe₂O₃ des FeO(OH) und Fe₂O₄.

7. Verbundmaterial nach Anspruch 5 oder 6, **dadurch gekennzeichnet, dass** die kristalline Phase auf der Basis von Eisen (III) ist und gebildet ist aus Maghemit, Magnetit, Goethit, einer Mischung aus Goethit und Lepidokrokit oder Hematit.

8. Verbundmaterial nach einem beliebigen der Ansprüche 1 bis 7, **dadurch gekennzeichnet, dass** es eine Kationen-Austauschfähigkeit von ungefähr 7 bis ungefähr 300 meq/100 g aufweist.

9. Verfahren zur Herstellung eines Verbundmaterials nach einem beliebigen der Ansprüche 1 bis 8, die folgenden Schritte umfassend:
- einen Schritt des Zurverfügungstellens einer wässrigen Diatomeenerde-Lösung, die Calziumcarbonat mit einer wässrigen Eisenlösung (II) zugeordnet ist, und
- einen Schritt des Gewinnens des Verbundmaterials, insbesondere durch Zentrifugieren, Filtern oder Gefriertrocknen.

10. Verfahren nach Anspruch 9, einen darauffolgenden Schritt der thermischen Behandlung des Verbundmaterials umfassend.

11. Verwendung eines Verbundmaterials nach einem beliebigen der Ansprüche 1 bis 8 für die Dekontaminierung von kontaminierten Böden und Wässern, die durch Kationen, insbesondere Schwermetallkationen verunreinigt sind, für das Zurückhalten von anionischen oder kationischen Schadstoffen oder Arsen-Oxyanionen, oder als Ionenaustauscher, Düngemittel, antibakterielles Mittel, Fungizid, Katalysator oder Farbenzusatz.

## Claims

1. Composite material comprising diatomaceous earth in association with calcium carbonate and a crystalline phase based on iron, **characterised in that** said crystalline phase is present only at the surface of said diatomaceous earth.

2. Composite material according to claim 1, **characterised in that** the diatomaceous earth is untreated.

3. Composite material according to claim 1 or 2, **characterised in that** the iron is in halide, nitrate, sulfate, sulfonate, phosphate, carbonate, acetate, oxalate or oxide form.

4. Composite material according to any one of claims 1 to 3, **characterised in that** the diatomaceous earth is chosen from the group composed of macroporous siliceous materials of fossilised eukaryotic algae.

5. Composite material according to any one of claims 1 to 4, **characterised in that** the crystalline phase is composed of a single phase based on iron(III) oxide or of a mixture of phases based on iron(III) oxide and/or iron(III) oxyhydroxide.

6. Composite material according to claim 5, **characterised in that** the iron(lll) oxides are chosen from the group composed of Fe₂O₃, FeO(OH) and Fe₃O₄.

7. Composite material according to claim 5 or 6, **characterised in that** the crystalline phase is based on iron(lll) and is composed of maghemite, magnetite, goethite, a mixture of goethite and lepidocrocite or hematite.

8. Composite material according to any one of claims 1 to 7, **characterised in that** it has a cation exchange capacity of from approximately 7 to approximately 300 meq/100 g.

9. Method for preparing a composite material according to any one of claims 1 to 8, comprising the following steps:
- a step of bringing together an aqueous solution of diatomaceous earth in association with calcium carbonate and an aqueous iron(II) solution, and
- a step of recovering said composite material, especially by centrifugation, filtration or lyophilisation.

10. Method according to claim 9, comprising a subsequent step of heat treating said composite material.

11. Use of a composite material according to any one of claims 1 to 8 for the decontamination of ground and water contaminated by cations, especially heavy metal cations, for the retention of anionic or cationic contaminants or of oxyanions of the arsenic type, or as an ion exchanger, fertiliser, anti-bacterial agent, fungicide, catalyst or paint additive.
